# EUROPEAN PATENT SPECIFICATION

(11) **EP 3 530 457 B1**
(45) Date of publication and mention of the grant of the patent: **09.12.2020**
(21) Application number: 19158056.2
(22) Date of filing: 19.02.2019
(51) Int. Cl.: B32B 27/08, B32B 27/18, B32B 27/30, B32B 27/32

(54) **HEAT-SHRINKABLE MULTI-LAYER FILM**
WÄRMESCHRUMPFENDER MEHRSCHICHTFILM
FILM MULTICOUCHES RÉTRACTABLE À LA CHALEUR

(30) Priority: 22.02.2018 IT 201800002941
(43) Date of publication of application: 28.08.2019
(73) Proprietor: Decofilm S.P.A., 21040 Uboldo, Varese (IT)
(72) Inventor: PEDRON, Serge, I-21040 Uboldo, VARESE (IT); MORAZZONI, Angelo, I-21040 Uboldo, VARESE (IT)
(74) Representative: Long, Giorgio

(56) References cited:
- EP-A1- 0 774 349
- EP-A1- 1 566 266
- US-A- 5 300 353
- US-A1- 2012 288 651
- US-A1- 2017 144 416

## Description

### Technical field of the invention

The present invention relates to a multi-layer heat-shrinkable film for packaging products in trays or according to other techniques, such as the flow-pack, L-SEALER, SKIN, BAG techniques, etc. In particular embodiments, the heat-shrinkable film is a film providing a barrier to gases, fragrances, and aromas.

### Background art

The use of transparent films for packaging various products, in particular food products, is widespread. Very often such films are of the heat-shrinkable type.

In particular, the perishable food product packaging industry often requires that the material has barrier properties against gases, fragrances and aromas. Such material may be marketed in several forms, as a film, as a bag, of the shrinking barrier or stabilized type, and so on, and is generally made for a precise application or for a certain packaging production process. For example, the materials in the form of a film may be dedicated to the packaging of products in trays, such as trays of the type made of expanded polystyrene (EPS) or polypropylene (PP) or polyethylene (PE), or to a packaging according to the flow-pack technique, which provides for the complete wrapping of the product without the aid of trays or other supports.

The materials used for these various applications are very different from one another. For heat-sealing trays, it would be advisable for the material to have a high heat-shrinking percentage at the operating temperature (for example, about 50% at 120°C), but a low shrinking force so as not to deform the tray. For a packaging of the flow-pack type the heat-shrinking must be very high, so that the film may adhere in the best way to the surface of the product.

Known materials associate a high heat-shrinking with a high shrinking force, or vice versa. The issue encountered with the films of the background art is therefore that, by operating with a material having a low heat-shrinking percentage (about 10% at 120°C), so as to avoid deforming the tray, the film tends to wilt due to the vacuum formed internally when the carbon dioxide contained in the controlled atmosphere is absorbed by the water of the food. To avoid this drawback, manufacturers use high-thickness films, with the consequent inconvenience of high cost and scarce environmental compatibility.

In the background art, no heat-shrinkable material for packaging products exists which associates a high heat-shrinking percentage with a low shrinking force. Not even a packaging material of the universal type exists, i.e., which is adaptable to the various packaging processes and to the various products to be packaged.

EP 1 566 266 A1, US 2012/288651 and US 2017/144416 disclose a co-extruded heat-shrinkable multi-layer material comprising at least one layer consisting at least of 90% by weight of amorphous SBC (styrene-butadiene copolymer). Moreover, EP 1 566 266 A1 also discloses a laminate having at least 20% by weight of LLDPE in at least one layer and also suggests the use of ULDPE.

US 2017/144416 also discloses laminates having EVOH as a barrier material.

EP 0 774 349 A1 discloses a heat-shrinkable co-extruded multi-layer film comprising an ethylenepropylene-butene terpolymer.

### Summary of the invention

The issues outlined above are at least partly solved by a material for manufacturing heat-shrinkable films in accordance with the invention.

Therefore, the present invention relates to a multi-layer heat-shrinkable material as defined in claim 1 and, in the preferred embodiments thereof, in the dependent claims, the text of which forms an integral part of the present description.

The invention further relates to a process for manufacturing the material in accordance with the invention and to a barrier or non-barrier heat-shrinkable film thus obtained.

### Detailed description of the invention

The heat-shrinkable material in accordance with the invention is a co-extruded multi-layer film comprising at least 5 layers and may be a barrier or non-barrier material.

The terms "barrier material" or "non-barrier material" mean, respectively, materials which are or are not a barrier effect to the passage of gases, fragrances and aromas from the exterior towards the interior of the package or vice versa, i.e., which prevent or do not prevent, respectively, the passage of gases, fragrances and aromas through the material itself. The term "non-barrier material" also means a material which is a partial or low barrier to the passage of gas. More in particular, the barrier materials according to the present invention are those having an oxygen permeability (measured with a film having a thickness of 25 microns) lower than 100 cm³/m² 24h bar, preferably lower than 10 cm³/m² 24h bar.

The barrier effect as defined above is generally directed towards atmospheric gases and towards gases contained in controlled atmosphere packages. Examples of such gases are oxygen, nitrogen, argon and carbon dioxide, water vapor, as well as food fragrances or aromas.

In preferred embodiments, the material in accordance with the invention has an oxygen permeability lower than 5 cm³/m² 24h bar, a carbon dioxide permeability lower than 50 cm³/m² 24h bar (both measured according to the ASTM D 3945 standard), and a water vapor permeability lower than 20 g/m²/24h (measured according to the ASTM F 1249 standard, at 35°C and 95% relative humidity).

In certain embodiments, the multi-layer material of the invention, both in the barrier and in the non-barrier form thereof, has a barrier effect against Mineral Oil Saturated Hydrocarbon (MOSH) and Mineral Oil Aromatic Hydrocarbon (MOAH) which are usually contained in inks for printing on paper or cardboard and therefore also in recycled paper or cardboard. For example, recycled cardboard is commonly used in boxes for food products of various types, such as, for example, frozen pizzas.

The heat-shrinkable multi-layer material in accordance with the invention is characterized by a high heat-shrinking combined with a low shrinking force.

In certain embodiments, the heat-shrinking percentage is from 20% to 35% at 90°C, or from 50% to 60% at 120°C (measured according to the ASTM/ISO D 2732 - UNI 8515-83 standard) and the shrinking force is from 1 to 3 Mpa, preferably from 1.5 to 2.5 Mpa, at 120°C (measured according to the ASTM/ISO 14616 standard).

In certain embodiments, the material in accordance with the invention has a tensile strength from 40 to 70 N/mm², a tensile strain from 65% to 95% and a tensile stress from 75 to 105 Mpa (all measured according to the ASTM D 882 standard).

The material of the invention also has high optical properties. In certain embodiments, the material of the invention has a glossiness higher than 95%, preferably, of about 100%, (measured according to the ASTM D 2457 standard, at an angle of 85°) and a transparency defined as a glazing lower than 4% (measured according to the ASTM D 1003 standard at a wide-angle reflection haze).

The heat-shrinkable multi-layer material in accordance with the invention is characterized in that it is completely recyclable, not comprising components which have undergone a crosslinking process.

The multi-layer material in accordance with the invention is characterized in that it may be used universally, for example, both in the packaging by heat-sealing (on trays made of polystyrene or polyethylene/polypropylene) as well as in flow-pack packaging. In particular, the material of the invention may be used in the main packaging processes, such as LID, Flow-Pack, sous-vide, Skin and L-sealer.

The properties described above may be obtained by virtue of the multi-layer material as described below.

In particular, the multi-layer material in accordance with the invention is characterized in that it comprises at least two inner layers consisting of at least 90% by weight, or at least of 95% by weight, or of about 100% by weight, of amorphous Styrene Butadiene Copolymer (SBC). For simplicity, said at least two inner layers composed as defined above may be hereinafter referred to as "amorphous SBC-based layer".

In certain embodiments, the SBC is amorphous SBS (styrene-butadiene-styrene block copolymer).

In preferred embodiments, the amorphous SBC has a Melt Flow Rate (MFR) from 8 to 14 g/10 min (measured according to the ISO 1133 standard, 200°C/5 Kg), a density from 1000 to 1100 kg/m³ (measured according to the ISO 1183 standard), a VICAT point from 75°C to 85°C (measured according to the ISO 306 standard), and a melting point from 190°C to 210°C (measured according to the ISO 306 standard).

The presence of amorphous SBC, as defined above, allows to provide the material of the invention with a high heat-shrinking percentage combined with a low shrinking force, preferably within the ranges defined above for such parameters.

The at least two amorphous SBC inner layers further provide the multi-layer material of the invention with a high barrier effect against MOAH and MOSH, allowing to adopt the material of the invention in flow-pack packaging processes for food which will subsequently be enclosed in recycled cardboard boxes.

The at least two amorphous SBC inner layers further provide the multi-layer material of the invention with high optical properties (in terms of film transparency) and optimal machinability.

In certain embodiments, the heat-shrinkable multi-layer material in accordance with the invention comprises at least one barrier-effect layer comprising at least 90% by weight, preferably at least 95% by weight, more preferably, about 100% by weight, of ethylene-vinyl alcohol copolymer (EVOH). For simplicity, said at least one layer composed as defined above may be hereinafter referred to as "EVOH-based layer".

In preferred embodiments, the EVOH copolymer contains a molar percentage of ethylene from 36 mol% to 48 mol%, or about 42 mol%.

In certain embodiments, the EVOH polymer has a Melt Flow Rate (MFR) from 1 to 3 g/10 min (measured according to the ISO 1133 standard, 210°C/2.16 Kg), a density from 1050 to 1150 kg/m³ (measured according to the ISO 1183 standard), a VICAT point from 135°C to 145°C (measured according to the ISO 306 standard), and a melting point from 160°C to 175°C (measured according to the ISO 306 standard).

In preferred embodiments, the at least one EVOH-based layer, as defined above, is arranged between two amorphous SBC-based layers as defined above. Thereby, the EVOH-based layer is encapsulated and protected by the two outer SBC-based layers and the barrier effect is enhanced. The SBC will be selected so as to have a high compatibility with the EVOH copolymer.

The multi-layer material of the invention also comprises two surface layers containing at least 20% by weight, or at least 25% by weight, of polypropylene-ethylene-butene terpolymer (TPEB). The TPEB, when present in a surface layer, favors the heat-sealing on trays made of polypropylene and, in general, favors the multi-layer material extrusion process.

In preferred embodiments, the TPEB has a Melt Flow Rate (MFR) from 4 to 8 g/10 min (measured according to the ISO 1133 standard, 230°C/2.16 Kg), a density from 800 to 950 kg/m³ (measured according to the ISO 1183 standard), a VICAT point from 95°C to 115°C (measured according to the ISO 306 standard), and a melting point from 125°C to 135°C (measured according to the ISO 306 standard).

In certain embodiments, the material of the invention comprises an inner layer comprising from 90% to 100% by weight of TPEB.

In certain embodiments, the multi-layer material of the invention comprises at least one layer comprising at least 20% by weight, or at least 25% by weight, of Ultra-Low-Density Polyethylene (ULDPE, preferably, an ethylene-octene copolymer). The presence of the ULDPE has the function of limiting the shrinking force of the material and, when present in a surface layer of the multi-layer material of the invention, of favoring the heat-sealing of the material at low temperature.

In certain embodiments, the ULDPE polymer is in the amorphous form.

In preferred embodiments, the ULDPE has a Melt Flow Rate (MFR) from 0.7 to 2.5 g/10 min (measured according to the ISO 1133 standard, 190°C/2.16 Kg), a density from 850 to 950 kg/m³ (measured according to the ISO 1183 standard), a VICAT point from 75°C to 90°C (measured according to the ISO 306 standard), and a melting point from 115°C to 132°C (measured according to the ISO 306 standard).

In certain embodiments, the multi-layer material of the invention comprises at least one layer containing at least 20% by weight, or at least 25% by weight, of linear low-density polyethylene (LLDPE). The presence of the LLDPE has the function of increasing the resistance to tearing of the material and, when present in a surface layer of the multi-layer material of the invention, of favoring the heat-sealing of the material with trays made of polyethylene.

In preferred embodiments, the LLDPE has a Melt Flow Rate (MFR) from 0.7 to 2.5 g/10 min (measured according to the ISO 1133 standard, 190°C/2.16 Kg), a density from 900 to 950 kg/m³ (measured according to the ISO 1183 standard), and a VICAT point from 100°C to 120°C (measured according to the ISO 306 standard).

In certain embodiments, the multi-layer material of the invention comprises, in at least one surface layer, an amount from 10% by weight and 15% by weight, or about 13% by weight, of an anti-fog composition, hereinafter called MasterBatch Anti-Fog (MBAF). The MBAF increases the surface tension of the water allowing the sliding and therefore the elimination of the condensation from the surface of the material. The MBAF also provides the material with an anti-adhesion effect from the surfaces of the heat-sealing devices, during the step of packaging a product in a tray, which allows the separation of the packaged tray from the heat-sealing plate.

In preferred embodiments, the MBAF is a composition containing glycerol ester, for example, glycerol monooleate or glycerol monostearate, or a polyglycerol ester, and has a Melt Flow Rate (MFR) from 1 to 3 g/10 min (measured according to the ISO 1133 standard, 190°C/2.16 Kg), a density from 550 to 650 kg/m³ (measured according to the ISO 1183 standard), a VICAT point from 60°C to 75°C (measured according to the ISO 306 standard), and a melting point from 90°C to 105°C (measured according to the ISO 306 standard).

In certain embodiments, the MBAF is also contained in at least one first inner layer below the surface layer, preferably in an amount from 5% by weight to 15% by weight, together with an amount from 85% by weight to 95% by weight of TPEB, in which the MBAF and the TPEB together form about 100% by weight of said at least one first inner layer. The TPEB and the MBAF are preferably as defined above. The presence of the MBAF in said at least one first inner layer has the function of limiting the inner migration from the surface layer and of forming a tank of MBAF. The presence of an amount of TPEB from 85% by weight to 95% by weight in said at least one first inner layer allows both to prevent the migration of the MBAF towards the interior of the multi-layer material, as well as to facilitate the overall extrusion of the material.

In certain embodiments, at least one surface layer of the multi-layer material of the invention comprises an amount from 0.5% by weight and 2% by weight of an antioxidant agent and/or an amount from 0.5% by weight and 2% by weight of a technological adjuvant agent. Preferably, the antioxidant agent is hydroxyphenyl propionate and/or the technological agent is a fluoroelastomer.

In certain embodiments, at least one surface layer of the multi-layer material comprises more than 20% by weight of TPEB, more than 20% by weight of ULDPE and more than 20% of LLDPE, with the condition that the sum of the amounts by weight of TPEB, ULDPE and LLDPE is no more than 90%. TPEB, ULDPE and LLDPE are, preferably, as defined above. The simultaneous presence of such components in the surface layer allows the multi-layer material of the invention to be used universally, on any tray, in heat-sealing processes, as well as in flow-pack packaging processes.

In certain embodiments, the multi-layer material of the invention is a co-extruded multi-layer comprising:
- at least one surface layer comprising i) from 25% by weight to 35% by weight of TPEB, ii) from 25% by weight to 35% by weight of ULDPE, and iii) from 20% by weight to 30% by weight of LLDPE, and, optionally, iv) from 10% by weight to 15% by weight of MBAF and/or from 0.5% by weight to 2% by weight of an antioxidant agent and/or from 0.5% by weight to 2% by weight of a technological adjuvant agent;
- at least one first inner layer, in contact with said at least one surface layer, comprising i) from 5% by weight to 15% by weight of MBAF and ii) from 85% by weight to 95% by weight of TPEB, in which the MBAF and the TPEB together form about 100% by weight of said at least one first inner layer;
- at least one second inner layer, in contact with said at least one first inner layer, comprising more than 90% by weight, or more than 95% by weight, or about 100% by weight of amorphous SBC;
- at least one third inner layer, in contact with said at least one second inner layer, comprising at least 90% by weight, or at least 95% by weight, or about 100% by weight of EVOH.

Amorphous SBC, TPEB, ULDPE, LLDPE, EVOH, MBAF and the antioxidant and technological adjuvant agents are, preferably, as defined above.

Embodiments characterized by the absence of an EVOH-based layer do not have a barrier effect against gases, but the presence of the amorphous SBC does however provide a barrier effect against MOAH and MOSH, as previously described. The multi-layer material thus obtained is suitable for those applications for which storage in controlled atmosphere is not envisaged and which therefore use trays made of expanded polystyrene, which, in turn, are non-barrier trays.

In certain embodiments, however, the multi-layer material described above may also comprise an inner EVOH-based layer, so as to provide the material with a barrier effect against gases, while preserving at least one surface layer based on amorphous SBC, so as to allow the heat-sealing on trays made of expanded polystyrene. These embodiments may be used in applications in which the tray made of expanded polystyrene also comprises a layer with a gas barrier effect.

In certain embodiments, the multi-layer material of the invention comprises at least 7 layers, or at least 9 layers. The additional layers may be selected from the inner layers of the multi-layer material previously described. In such embodiments, the multi-layer material of the invention preferably has a thickness from 15 microns to 28 microns.

In certain embodiments, the multi-layer material of the invention is a double film with 9 layers, 13 layers or more, obtained by adhering two single films, and preferably has a thickness from 26 microns to 50 microns. Such double film may be obtained by passing two single films between two rollers, for example, at a temperature of about 80°C. In such case, it is essential that each of the two single films comprise a surface layer comprising polymers which may adhere by heat, at the operating temperature of the rolling rollers, and that such surface adhesion layers appear opposed in the coupling step.

Therefore, in preferred embodiments, the double film in accordance with the invention will be formed by coupling two single films, each of which comprising:
- a first surface layer comprising i) from 25% by weight to 35% by weight of TPEB, ii) from 25% by weight to 35% by weight of ULDPE, and iii) from 20% by weight to 30% by weight of LLDPE, and, optionally, iv) from 10% by weight to 15% by weight of MBAF and/or from 0.5% by weight to 2% by weight of an antioxidant agent and/or from 0.5% by weight to 2% by weight of a technological adjuvant agent;
- at least one first inner layer, in contact with said at least one surface layer, comprising i) from 5% by weight to 15% by weight of MBAF and ii) from 85% by weight to 95% by weight of TPEB, in which the MBAF and the TPEB together form about 100% by weight of said at least one first inner layer;
- at least one second inner layer, in contact with said at least one first inner layer, comprising more than 90% by weight, or more than 95% by weight, or about 100% by weight of amorphous SBC;
- at least one third inner layer, in contact with said at least one second inner layer, comprising at least 90% by weight, or at least 95% by weight, or about 100% by weight of EVOH;
- a second surface layer comprising i) from 90% by weight to 97% by weight of a polypropylene/butene/alpha-olefin terpolymer (TPA), in which the alpha-olefin is preferably octene, and ii) from the 3% by weight to 10% by weight of a polypropylene-ethylene-metallocene copolymer (CPEM) plastomer.

Amorphous SBC, TPEB, ULDPE, LLDPE, EVOH, MBAF and the antioxidant and technological adjuvant agents are, preferably, as defined above.

The TPA, preferably, has a Melt Flow Rate (MFR) from 3 to 6 g/10 min (measured according to the ISO 1133 standard, 230°C/2.16 Kg), a density from 850 to 950 kg/m³ (measured according to the ISO 1183 standard), a VICAT point from 100°C to 115°C (measured according to the ISO 306 standard), and a melting point from 122°C to 140°C (measured according to the ISO 306 standard).

The CPEM, preferably, has a Melt Flow Rate (MFR) from 8 to 12 g/10 min (measured according to the ISO 1133 standard, 230°C/2.16 Kg), a density from 800 to 900 kg/m³ (measured according to the ISO 1183 standard), a VICAT point from 20°C to 35°C (measured according to the ISO 306 standard), and a melting point from 50°C to 65°C (measured according to the ISO 306 standard).

The co-extruded multi-layer material in accordance with the invention may be obtained by means of known processes for manufacturing films made of multi-layer material. Such processes include, in particular, the technologies known as double- or triple-bubble co-extrusion. As is known, such technologies allow to obtain a bi-orientation of the material (according to the machine direction MD and according to the transverse direction TD) and therefore to suitably modulate the shrinking percentage of the film obtained. In particular, to the ends of the present invention, the double-bubble co-extrusion process is preferred.

As known, the double-bubble co-extrusion process involves the co-extrusion of a multi-layer film through a circular die, so as to extrude the first bubble in the form of a tube of material, and the subsequent insufflation into the tube of a gas, so as to expand the tube to form a so-called secondary bubble, which is finally passed through the rollers providing the final multi-layer film. Instead, in the case of a triple-bubble co-extrusion, the secondary bubble is passed through the rollers for the re-aggregation thereof and, after appropriate heating, it is expanded again to form the third bubble.

The double-bubble co-extrusion process in accordance with the invention comprises a step of co-extruding and a step of orienting the extruded material, in which the orientation step is carried out by suitably modulating the following two parameters:
- Blow-Up Ratio (BUR), defined as the ratio of the bubble diameter to the co-extruded tube diameter (corresponding to the diameter of the circular die);
- Bubble Stretching Ratio (BSR), defined as the ratio of the secondary bubble feed rate to the extruded tube feed rate after cooling in a cold water tank.

To the ends of the present invention, a BUR ≥ 5 and generally ≤ 6 and a BSR ≥ 5 and generally ≤ 6 will be used, preferably using a BUR/BSR ratio of about 1. Under these conditions, the mechanical properties of the multi-layer material described above, in particular the high shrinking percentage combined with a low shrinking force, are maximized.

To this end, the formation of the first and of the second bubble will be carried out using the following operating conditions:
- Tubular speed 4-8 m/min
- Second bubble speed 24-48 m/min
- Tubular diameter 150-250 mm
- Second bubble diameter 900-1500 mm
- BUR >5
- BSR >5.

The co-extrusion process upstream of the formation of the bubbles will instead be carried out, preferably, using the following operating conditions:

| | |
|---|---|
| - oven temperature | 350-450°C; |
| -last stage temperature | 110-150°C; |
| -head temperature | 220-245°C; |
| -extensor screw temperature | 190-240°C; |
| -tank and calibrator water temperature | 10-25°C; |
| -screw flow rates | 6-25 kg/hr. |

### EMBODIMENT

Using the method described above, a multi-layer material in accordance with the invention was manufactured having the following six layers (layers A-G) in sequence from the upper surface layer to the lower surface layer (% by weight):
Layer A
   TPEB 30% + LLDPE 35% + ULDPE 20% + MBAF 12% + PREMIXING 3%, in which the PREMIXING consists of antioxidant masterbatch (hydroxyphenyl propionate on polyethylene support) 1% + fluoroelastomer 1% + anti-blocking composition 1%
Layer B
   TPEB 88% + MBAF 12%
Layer C
   SBC 100%
Layer D
   EVOH 100%
Layer E
   SBC 100%
Layer F
   TPEB 88% + MBAF 12%
Layer G
   TPEB 30% + LLDPE 35% + ULDPE 20% + MBAF 12% + PREMIXING 3%, in which the PREMIXING consists of antioxidant masterbatch (hydroxyphenyl propionate on polyethylene support) 1% + fluoroelastomer 1% + anti-blocking composition 1%.

The material of the invention may be in various forms, such as a flat sheet, a single-fold, a bag, according to the packaging process dedicated thereto.

## Claims

1. A co-extruded heat-shrinkable bi-oriented multi-layer material, comprising at least two inner layers consisting of at least 90% by weight, or at least 95% by weight, or about 100% by weight, of amorphous Styrene Butadiene Copolymer (SBC) and two surface layers comprising at least 20% by weight, or at least 25% by weight, of polypropylene-ethylene-butene terpolymer (TPEB) .

2. A multi-layer material according to claim 1, having a heat-shrinking percentage from 20% to 35% at 90°C, or from 50% to 60% at 120°C (measured according to the ASTM/ISO D 2732 - UNI 8515-83 standard) and a shrinking force from 1 to 3 Mpa, or from 1.5 to 2.5 Mpa, at 120°C (measured according to the ASTM/ISO 14616 standard), the multi-layer material preferably having:
- a tensile strength from 40 to 70 N/mm², a tensile strain from 65% to 95% and a tensile stress from 75 to 105 Mpa (all measured according to the ASTM D 882 standard), and/or
- a glossiness higher than 95%, or of about 100%, (measured according to the ASTM D 2457 standard, at an angle of 85°) and a transparency defined as a glazing lower than 4% (measured according to the ASTM D 1003 standard at a wide-angle reflection haze).

3. A multi-layer material according to claim 1 or 2, wherein the amorphous SBC has a Melt Flow Rate (MFR) from 8 to 14 g/10 min (measured according to the ISO 1133 standard, 200°C/5 Kg), a density from 1000 to 1100 kg/m³ (measured according to the ISO 1183 standard), a VICAT point from 75°C to 85°C (measured according to the ISO 306 standard), and a melting point from 190°C to 210°C (measured according to the ISO 306 standard), and wherein the amorphous SBC is preferably an amorphous styrene-butadiene-styrene (SBS) copolymer.

4. A multi-layer material according to any one of claims 1 to 3, wherein the TPEB has a Melt Flow Rate (MFR) from 4 to 8 g/10 min (measured according to the ISO 1133 standard, 230°C/2.16 Kg), a density from 800 to 950 kg/m³ (measured according to the ISO 1183 standard), a VICAT point from 95°C to 115°C (measured according to the ISO 306 standard), and a melting point from 125°C to 135°C (measured according to the ISO 306 standard).

5. A multi-layer material according to any one of claims 1 to 4, comprising at least one layer comprising at least 20% by weight, or at least 25% by weight, of Ultra-Low-Density Polyethylene (ULDPE, preferably, an ethylene-octene copolymer), wherein, preferably, the ULDPE polymer is in amorphous form and wherein, preferably, the ULDPE has a Melt Flow Rate (MFR) from 0.7 to 2.5 g/10 min (measured according to the ISO 1133 standard, 190°C/2.16 Kg), a density from 850 to 950 kg/m³ (measured according to the ISO 1183 standard), a VICAT point from 75°C to 90°C (measured according to the ISO 306 standard), and a melting point from 115°C to 132°C (measured according to the ISO 306 standard).

6. A multi-layer material according to any one of claims 1 to 5, comprising at least one layer comprising at least 20% by weight, or at least 25% by weight, of Linear Low-Density Polyethylene (LLDPE).

7. A multi-layer material according to any one of claims 1 to 6, comprising, in at least one surface layer, an amount from 10% by weight to 15% by weight, or of about 13% by weight, of an anti-fog composition (MBAF), wherein, preferably, the MBAF is a composition containing glycerol ester, for example, glycerol monooleate or glycerol monostearate, or a polyglycerol ester, and has a Melt Flow Rate (MFR) from 1 to 3 g/10 min (measured according to the ISO 1133 standard, 190°C/2.16 Kg), a density from 550 to 650 kg/m³ (measured according to the ISO 1183 standard), a VICAT point from 60°C to 75°C (measured according to the ISO 306 standard), and a melting point from 90°C to 105°C (measured according to the ISO 306 standard) and wherein, preferably, the MBAF is also contained in at least one first inner layer below the surface layer, preferably, in an amount from 5% by weight to 15% by weight, along with an amount from 85% by weight to 95% by weight of TPEB, wherein the MBAF and the TPEB form together about 100% by weight of said at least one first inner layer.

8. A multi-layer material according to any one of claims 1 to 7, comprising at least one barrier-effect layer comprising at least 90% by weight, preferably, at least 95% by weight, more preferably, about 100% by weight, of ethylene-vinyl alcohol copolymer (EVOH), wherein, preferably, the EVOH copolymer contains a molar percentage of ethylene from 36 mol% to 48 mol%, or of about 42 mol%, and wherein the EVOH polymer has a Melt Flow Rate (MFR) from 1 to 3 g/10 min (measured according to the ISO 1133 standard, 210°C/2.16 Kg), a density from 1050 to 1150 kg/m³ (measured according to the ISO 1183 standard), a VICAT point from 135°C to 145°C (measured according to the ISO 306 standard), and a melting point from 160°C to 175°C (measured according to the ISO 306 standard) and wherein, preferably, the at least one EVOH-based layer is arranged between two amorphous SBC-based layers.

9. A multi-layer material according to any one of claims 1 to 8, having an oxygen permeability lower than 5 cm³/m² 24h bar, a carbon dioxide permeability lower than 50 cm³/m² 24h bar (both measured according to the ASTM D 3945 standard), and a water vapor permeability lower than 20 g/m²/24h (measured according to the ASTM F 1249 standard, at 35°C and 95% relative humidity), and wherein the multi-layer material has a barrier effect against Mineral Oil Saturated Hydrocarbon (MOSH) and Mineral Oil Aromatic Hydrocarbon (MOAH).

10. A multi-layer material according to any one of claims 1 to 9, comprising:
- at least one surface layer comprising i) from 25% by weight to 35% by weight of TPEB, ii) from 25% by weight to 35% by weight of ULDPE, and iii) from 20% by weight to 30% by weight of LLDPE, and, optionally, iv) from 10% by weight to 15% by weight of MBAF and/or from 0.5% by weight to 2% by weight of an antioxidant agent and/or from 0.5% by weight to 2% by weight of a technological adjuvant agent;
- at least one first inner layer, in contact with said at least one surface layer, comprising i) from 5% by weight to 15% by weight of MBAF and ii) from 85% by weight to 95% by weight of TPEB, wherein the MBAF and the TPEB together form about 100% by weight of said at least one first inner layer;
- at least one second inner layer, in contact with said at least one first inner layer, comprising more than 90% by weight, or more than 95% by weight, or about 100% by weight of amorphous SBC;
- at least one third inner layer, in contact with said at least one second inner layer, comprising at least 90% by weight, or at least 95% by weight, or about 100% by weight of EVOH.

11. A multi-layer material according to any one of claims 1 to 9, is a double film, obtained by adhering two single films, each of them comprising:
- a first surface layer comprising i) from 25% by weight to 35% by weight of TPEB, ii) from 25% by weight to 35% by weight of ULDPE, and iii) from 20% by weight to 30% by weight of LLDPE, and, optionally, iv) from 10% by weight to 15% by weight of MBAF and/or from 0.5% by weight to 2% by weight of an antioxidant agent and/or from 0.5% by weight to 2% by weight of a technological adjuvant agent;
- at least one first inner layer, in contact with said at least one surface layer, comprising i) from 5% by weight to 15% by weight of MBAF and ii) from 85% by weight to 95% by weight of TPEB, wherein the MBAF and the TPEB together form about 100% by weight of said at least one first inner layer;
- at least one second inner layer, in contact with said at least one first inner layer, comprising more than 90% by weight, or more than 95% by weight, or about 100% by weight of amorphous SBC;
- at least one third inner layer, in contact with said at least one second inner layer, comprising at least 90% by weight, or at least 95% by weight, or about 100% by weight of EVOH;
- a second surface layer comprising i) from 90% by weight to 97% by weight of a polypropylene/butene/alpha-olefin terpolymer (TPA), wherein the alpha-olefin is preferably octene, and ii) from the 3% by weight to 10% by weight of a polypropylene-ethylene-metallocene copolymer (CPEM) plastomer.

12. A multi-layer material according to claim 11, wherein the TPA has a Melt Flow Rate (MFR) from 3 to 6 g/10 min (measured according to the ISO 1133 standard, 230°C/2.16 Kg), a density from 850 to 950 kg/m³ (measured according to the ISO 1183 standard), a VICAT point from 100°C to 115°C (measured according to the ISO 306 standard), and a melting point from 122°C to 140°C (measured according to the ISO 306 standard), and wherein the CPEM has a Melt Flow Rate (MFR) from 8 to 12 g/10 min (measured according to the ISO 1133 standard, 230°C/2.16 Kg), a density from 800 to 900 kg/m³ (measured according to the ISO 1183 standard), a VICAT point from 20°C to 35°C (measured according to the ISO 306 standard), and a melting point from 50°C to 65°C (measured according to the ISO 306 standard).

13. A double-bubble co-extrusion process for obtaining the material according to any one of claims 1 to 12, comprising a step of co-extruding and a step of orienting the extruded material, wherein the orientation step is carried out under the following operating conditions:
- Tubular speed 4-8 m/min
- Second bubble speed 24-48 m/min
- Tubular diameter 150-250 mm
- Second bubble diameter 900-1500 mm
- Blow-Up Ratio (BUR), defined as the ratio of the bubble diameter to the co-extruded tube diameter, ≥ 5 and preferably ≤ 6;
- Bubble Stretching Ratio (BSR), defined as the ratio of the secondary bubble feed rate to the extruded tube feed rate after cooling in a cold water tank, ≥ 5 and preferably ≤ 6,
preferably using a BUR/BSR ratio of about 1,
wherein, preferably, the co-extrusion step is carried out using the following operating conditions:
| | |
|---|---|
| - oven temperature | 350-450°C; |
| -last stage temperature | 110-150°C; |
| -head temperature | 220-245°C; |
| -extensor screw temperature | 190-240°C; |
| -tank and calibrator water temperature | 10-25°C; |
| - screw flow rates | 6-25 kg/hr. |

## Patentansprüche

1. Coextrudiertes wärmeschrumpfbares bi-orientiertes Mehrschichtmaterial, umfassend wenigstens zwei innere Schichten, bestehend aus wenigstens 90 Gew.-% oder wenigstens 95 Gew.-% oder etwa 100 Gew.-% amorphes Styrol-Butadien-Copolymer (SBC) und zwei Oberflächenschichten, umfassend wenigstens 20 Gew.-% oder wenigstens 25 Gew.-% Polypropylen-Ehtylen-Buten-Terpolymer (TPEB).

2. Mehrschichtmaterial nach Anspruch 1 mit einem Wärmeschrumpfprozentsatz von 20 % bis 35 % bei 90 °C oder von 50 % bis 60 % bei 120 °C (gemessen gemäß dem ASTM/ISO D 2732 - UNI 8515-83 Standard) und einer Schrumpfkraft von 1 bis 3 Mpa oder von 1,5 bis 2,5 Mpa bei 120 °C (gemessen gemäß dem ASTM/ISO 14616 Standard), wobei das Mehrschichtmaterial bevorzugt aufweist:
- eine Zugfestigkeit von 40 bis 70 N/mm², eine Zugdehnung von 65 % bis 95 % und eine Zugspannung von 75 bis 105 Mpa (alle gemessen gemäß dem ASTM D 882 Standard), und/oder
- einen Glanz von mehr als 95 % oder etwa 100 % (gemessen gemäß dem ASTM D 2457 Standard bei einem Winkel von 85°) und eine Transparenz, definiert als eine Verglasung von weniger als 4% (gemessen gemäß dem ASTM D 1003 Standard bei Weitwinkelreflexionstrübung).

3. Mehrschichtmaterial nach Anspruch 1 oder 2, wobei das amorphe SBC eine Schmelzflussrate (MFR) von 8 bis 14 g/10 min (gemessen gemäß dem ISO 1133 Standard, 200 °C/5 kg), eine Dichte von 1000 bis 1100 kg/m³ (gemessen gemäß dem ISO 1183 Standard), einen VICAT-Punkt von 75 °C bis 85 °C (gemessen gemäß dem ISO 306 Standard) und ein Schmelzpunkt von 190 °C bis 210 °C (gemessen gemäß dem ISO 306 Standard) aufweist, und wobei das amorphe SBC bevorzugt ein amorphes StyrolButadien-Styrol (SBS) Copolymer ist.

4. Mehrschichtmaterial nach einem der Ansprüche 1 bis 3, wobei das TPEB eine Schmelzflussrate (MFR) von 4 bis 8 g/10 min (gemessen gemäß dem ISO 1133 Standard, 230 °C/2,16 kg), eine Dichte von 800 bis 950 kg/m³ (gemessen gemäß dem ISO 1183 Standard), einen VICAT-Punkt von 95 °C bis 115 °C (gemessen gemäß dem ISO 306 Standard) und ein Schmelzpunkt von 125 °C bis 135 °C (gemessen gemäß dem ISO 306 Standard) aufweist.

5. Mehrschichtmaterial nach einem der Ansprüche 1 bis 4, umfassend wenigstens eine Schicht, die wenigstens 20 Gew.-% oder wenigstens 25 Gew.-% Polyethylen mit extrem niedriger Dichte (ULDPE, bevorzugt ein Ethylen-Octen-Copolymer) umfasst, wobei das ULDPE-Polymer bevorzugt in einer amorpher Form vorliegt und wobei das ULDPE bevorzugt eine Schmelzflussrate (MFR) von 0,7 bis 2,5 g/10 min (gemessen gemäß dem ISO 1133 Standard, 190 °C/2,16 kg), eine Dichte von 850 bis 950 kg/m³ (gemessen gemäß dem ISO 1183 Standard), einen VICAT-Punkt von 75 °C bis 90 °C (gemessen gemäß dem ISO 306 Standard) und ein Schmelzpunkt von 115 °C bis 132 °C (gemessen gemäß dem ISO 306 Standard) aufweist.

6. Mehrschichtmaterial nach einem der Ansprüche 1 bis 5, umfassend wenigstens eine Schicht, die wenigstens 20 Gew.-% oder wenigstens 25 Gew.-% lineares Polyethylen niedriger Dichte (LLDPE) umfasst.

7. Mehrschichtmaterial nach einem der Ansprüche 1 bis 6, umfassend in wenigstens einer Oberflächenschicht eine Menge von 10 Gew.-% bis 15 Gew.-% oder etwa von 13 Gew.-% einer Antibeschlag-Zusammensetzung (MBAF), wobei die MBAF bevorzugt eine Zusammensetzung ist, die Glycerinester, beispielsweise Glycerinmonooleat oder Glycerinmonostearat oder einen Polyglycerinester enthält und eine Schmelzflussrate (MFR) von 1 bis 3 g/10 min (gemessen gemäß dem ISO 1133 Standard, 190 °C/2,16 kg), eine Dichte von 550 bis 650 kg/m³ (gemessen gemäß dem ISO 1183 Standard), einen VICAT-Punkt von 60 °C bis 75 °C (gemessen gemäß dem ISO 306 Standard) und einen Schmelzpunkt von 90 °C bis 105 °C (gemessen gemäß dem ISO 306 Standard) aufweist, und wobei die MBAF bevorzugt auch in wenigstens einer ersten inneren Schicht unterhalb der Oberflächenschicht enthalten ist, bevorzugt in einer Menge von 5 Gew.-% bis 15 Gew.-% zusammen mit einer Menge von 85 Gew.-% bis 95 Gew.-% TPEB, wobei die MBAF und das TPEB zusammen etwa 100 Gew.-% der wenigstens einen ersten inneren Schicht bilden.

8. Mehrschichtmaterial nach einem der Ansprüche 1 bis 7, umfassend wenigstens eine Barriereeffektschicht, umfassend wenigstens 90 Gew.-%, bevorzugt wenigstens 95 Gew.-%, stärker bevorzugt etwa 100 Gew.-% Ethylen-Vinylalkohol-Copolymer (EVOH), wobei das EVOH-Copolymer bevorzugt einen Molprozentsatz an Ethylen von 36 Mol-% bis 48 Mol-% oder von etwa 42 Mol-% enthält und wobei das EVOH-Polymer eine Schmelzflussrate (MFR) von 1 bis 3 g/10 min (gemessen gemäß dem ISO 1133 Standard, 210 °C/2,16 kg), eine Dichte von 1050 bis 1150 kg/m³ (gemessen gemäß dem ISO 1183 Standard), einen VICAT-Punkt von 135 °C bis 145 °C (gemessen gemäß dem ISO 306 Standard) und einen Schmelzpunkt von 160 °C bis 175 °C (gemessen gemäß dem ISO 306 Standard) aufweist, und wobei bevorzugt die wenigstens eine Schicht auf EVOH-Basis zwischen zwei Schichten auf Basis von amorphem SBC angeordnet ist.

9. Mehrschichtmaterial nach einem der Ansprüche 1 bis 8 mit einer Sauerstoffdurchlässigkeit von weniger als 5 cm³/m² 24h bar, einer Kohlenstoffdioxiddurchlässigkeit von weniger als 50 cm³/m² 24h bar (beide gemessen gemäß dem ASTM D 3945 Standard) und einer Wasserdampfdurchlässigkeit von weniger als 20 g/m²/24 h (gemessen gemäß dem ASTM F 1249 Standard bei 35 °C und 95 % relativer Luftfeuchtigkeit), und wobei das Mehrschichtmaterial einen Barriereeffekt gegen Mineralöl-gesättigten Kohlenwasserstoff (MOSH) und Mineralöl-aromatischen Kohlenwasserstoff (MOAH) aufweist.

10. Mehrschichtmaterial nach einem der Ansprüche 1 bis 9, umfassend:
- wenigstens eine Oberflächenschicht, umfassend i) von 25 Gew.-% bis 35 Gew.-% TPEB, ii) von 25 Gew.-% bis 35 Gew.-% ULDPE und iii) von 20 Gew.-% bis 30 Gew.-% LLDPE und gegebenenfalls iv) von 10 Gew.-% bis 15 Gew.-% MBAF und/oder von 0,5 Gew.-% bis 2 Gew.-% eines Antioxidationsmittels und/oder von 0,5 Gew.-% bis 2 Gew.-% eines technologischen Hilfsstoffs;
- wenigstens eine erste innere Schicht in Kontakt mit der wenigstens einen Oberflächenschicht, umfassend i) von 5 Gew.-% bis 15 Gew.-% MBAF und ii) von 85 Gew.-% bis 95 Gew.-% TPEB, wobei die MBAF und das TPEB zusammen etwa 100 Gew.-% der wenigstens einen ersten inneren Schicht bilden;
- wenigstens eine zweite innere Schicht in Kontakt mit der wenigstens einen ersten inneren Schicht, umfassend mehr als 90 Gew.-% oder mehr als 95 Gew.-% oder etwa 100 Gew.-% amorphes SBC;
- wenigstens eine dritte innere Schicht in Kontakt mit der wenigstens einen zweiten inneren Schicht, umfassend wenigstens 90 Gew.-% oder wenigstens 95 Gew.-% oder etwa 100 Gew.-% EVOH.

11. Mehrschichtmaterial nach einem der Ansprüche 1 bis 9, welches ein Doppelfilm ist, der durch Anhaften von zwei Einzelfilmen erhalten wird, von denen jeder umfasst:
- eine erste Oberflächenschicht, umfassend i) von 25 Gew.-% bis 35 Gew.-% TPEB, ii) von 25 Gew.-% bis 35 Gew.-% ULDPE und iii) von 20 Gew.-% bis 30 Gew.-% LLDPE und gegebenenfalls iv) von 10 Gew.-% bis 15 Gew.-% MBAF und/oder von 0,5 Gew.-% bis 2 Gew.-% eines Antioxidationsmittels und/oder von 0,5 Gew.-% bis 2 Gew.-% eines technologischen Hilfsstoffs;
- wenigstens eine erste innere Schicht in Kontakt mit der wenigstens einen Oberflächenschicht, umfassend i) von 5 Gew.-% bis 15 Gew.-% MBAF und ii) von 85 Gew.-% bis 95 Gew.-% TPEB, wobei die MBAF und das TPEB zusammen etwa 100 Gew.-% der wenigstens einen ersten inneren Schicht bilden;
- wenigstens eine zweite innere Schicht in Kontakt mit der wenigstens einen ersten inneren Schicht, die mehr als 90 Gew.-% oder mehr als 95 Gew.-% oder etwa 100 Gew.-% amorphes SBC umfasst;
- wenigstens eine dritte innere Schicht in Kontakt mit der wenigstens einen zweiten inneren Schicht, die wenigstens 90 Gew.-% oder wenigstens 95 Gew.-% oder etwa 100 Gew.-% EVOH umfasst;
- eine zweite Oberflächenschicht, umfassend i) von 90 Gew.-% bis 97 Gew.-% eines Polypropylen/Buten/Alpha-Olefin-Terpolymers (TPA), wobei das Alpha-Olefin bevorzugt Octen ist, und ii) von 3 Gew.-% bis 10 Gew.-% eines Polypropylen-Ethylen-Metallocen-Copolymer-(CPEM)-Plastomers.

12. Mehrschichtmaterial nach Anspruch 11, wobei das TPA eine Schmelzflussrate (MFR) von 3 bis 6 g/10 min (gemessen gemäß dem ISO 1133 Standard, 230 °C/2,16 kg), eine Dichte von 850 bis 950 kg/m³ (gemessen gemäß dem ISO 1183 Standard), einen VICAT-Punkt von 100 °C bis 115 °C (gemessen gemäß dem ISO 306 Standard) und einen Schmelzpunkt von 122 °C bis 140 °C (gemessen gemäß dem ISO 306 Standard) aufweist, und wobei das CPEM eine Schmelzflussrate (MFR) von 8 bis 12 g/10 min (gemessen gemäß dem ISO 1133 Standard, 230 °C/2,16 kg), eine Dichte von 800 bis 900 kg/m³ (gemessen gemäß dem ISO 1183 Standard), einen VICAT-Punkt von 20 °C bis 35 °C (gemessen gemäß dem ISO 306 Standard) und einen Schmelzpunkt von 50 °C bis 65 °C (gemessen gemäß dem ISO 306 Standard) aufweist.

13. Doppelblasen-Coextrusionsverfahren zum Erhalten des Materials gemäß einem der Ansprüche 1 bis 12, umfassend einen Schritt eines Coextrudierens und einen Schritt eines Orientierens des extrudierten Materials, wobei der Orientierungsschritt unter den folgenden Betriebsbedingungen durchgeführt wird:
- Rohrgeschwindigkeit 4-8 m/min
- Zweite Blasengeschwindigkeit 24-48 m/min
- Rohrdurchmesser 150-250 mm
- Zweiter Blasendurchmesser 900-1500 mm
- Aufblasverhältnis (BUR), definiert als das Verhältnis des Blasendurchmessers zum coextrudierten Rohrdurchmesser, ≥ 5 und bevorzugt ≤ 6;
- Blasen-Stretching-Verhältnis (BSR), definiert als das Verhältnis der sekundären Blasenzufuhrrate zur Zufuhrrate des extrudierten Rohrs nach Abkühlen in einem Kaltwassertank, ≥ 5 und bevorzugt ≤ 6,
bevorzugt unter Verwendung eines BUR/BSR-Verhältnisses von etwa 1, wobei bevorzugt der Coextrusionsschritt unter Verwendung der folgenden Betriebsbedingungen durchgeführt wird:
| | |
|---|---|
| - Ofentemperatur | 350-450 °C; |
| - Letzte-Stufe-Temperatur | 110-150 °C; |
| - Kopf-Temperatur | 220-245 °C; |
| - Temperatur der Streckschnecke | 190-240 °C; |
| - Tank- und Kalibratorwassertemperatur | 10-25 °C; |
| - Schneckendurchflussraten | 6-25 kg/h. |

## Revendications

1. Matériau multicouche bi-orienté rétractable à la chaleur co-extrudé, comprenant au moins deux couches internes consistant en au moins 90 % en poids, ou au moins 95 % en poids, ou environ 100 % en poids, de copolymère de styrène butadiène (SBC) amorphe et deux couches de surface comprenant au moins 20 % en poids, ou au moins 25 % en poids, de terpolymère de polypropylène-éthylène-butène (TPEB).

2. Matériau multicouche selon la revendication 1, ayant un pourcentage de rétraction à la chaleur de 20 % à 35 % à 90 °C, ou de 50 % à 60 % à 120 °C (mesuré selon la norme ASTM/ISO D 2732 - UNI 8515-83) et une force de rétraction de 1 à 3 Mpa, ou de 1,5 à 2,5 Mpa, à 120 °C (mesurée selon la norme ASTM/ISO 14616), le matériau multicouche ayant de préférence :
- une résistance à la traction de 40 à 70 N/mm², un effort de traction de 65 % à 95 % et une contrainte de traction de 75 à 105 Mpa (tous mesurés selon la norme ASTM D 882), et/ou
- une brillance supérieure à 95 %, ou d'environ 100 % (mesurée selon la norme ASTM D 2457, à un angle de 85°) et une transparence définie comme un glaçage inférieure à 4 % (mesurée selon la norme ASTM D 1003 à un voile de réflexion à grand angle).

3. Matériau multicouche selon la revendication 1 ou 2, dans lequel le SBC amorphe a un indice de fluage (MFR) de 8 à 14 g/10 min (mesuré selon la norme ISO 1133, 200 °C/5 kg), une masse volumique de 1 000 à 1 100 kg/m³ (mesurée selon la norme ISO 1183), un point VICAT de 75 °C à 85 °C (mesuré selon la norme ISO 306), et un point de fusion de 190 °C à 210 °C (mesuré selon la norme ISO 306), et dans lequel le SBC amorphe est de préférence un copolymère de styrène-butadiène-styrène (SBS) amorphe.

4. Matériau multicouche selon l'une quelconque des revendications 1 à 3, dans lequel le TPEB a un indice de fluage (MFR) de 4 à 8 g/10 min (mesuré selon la norme ISO 1133, 230 °C/2,16 kg), une masse volumique de 800 à 950 kg/m³ (mesuré selon la norme ISO 1183), un point VICAT de 95 °C à 115 °C (mesuré selon la norme ISO 306), et un point de fusion de 125 °C à 135 °C (mesuré selon la norme ISO 306).

5. Matériau multicouche selon l'une quelconque des revendications 1 à 4, comprenant au moins une couche comprenant au moins 20 % en poids, ou au moins 25 % en poids, de polyéthylène ultra-basse densité (ULDPE, de préférence, un copolymère d'éthylène-octène), dans lequel, de préférence, le polymère ULDPE est sous forme amorphe et dans lequel, de préférence, l'ULDPE a un indice de fluage (MFR) de 0,7 à 2,5 g/10 min (mesuré selon la norme ISO 1133, 190 °C/2,16 kg), une masse volumique de 850 à 950 kg/m³ (mesurée selon la norme ISO 1183), un point VICAT de 75 °C à 90 °C (mesuré selon la norme ISO 306), et un point de fusion de 115 °C à 132 °C (mesuré selon la norme ISO 306).

6. Matériau multicouche selon l'une quelconque des revendications 1 à 5, comprenant au moins une couche comprenant au moins 20 % en poids, ou au moins 25 % en poids, de polyéthylène basse densité linéaire (LLDPE).

7. Matériau multicouche selon l'une quelconque des revendications 1 à 6, comprenant, dans au moins une couche de surface, une quantité de 10 % en poids à 15 % en poids, ou d'environ 13 % en poids, d'une composition antibuée (MBAF), dans lequel, de préférence, la MBAF est une composition contenant un ester de glycérol, par exemple, du monooléate de glycérol ou du monostéarate de glycérol, ou un ester de polyglycérol, et a un indice de fluage (MFR) de 1 à 3 g/10 min (mesuré selon la norme ISO 1133, 190 °C/2,16 kg), une masse volumique de 550 à 650 kg/m³ (mesurée selon la norme ISO 1183), un point VICAT de 60 °C à 75 °C (mesuré selon la norme ISO 306), et un point de fusion de 90 °C à 105 °C (mesuré selon la norme ISO 306), et dans lequel, de préférence, la MBAF est également contenue dans au moins une première couche interne sous la couche de surface, de préférence, dans une quantité de 5 % en poids à 15 % en poids, conjointement avec une quantité de 85 % en poids à 95 % en poids de TPEB, dans lequel la MBAF et le TPEB forment ensemble environ 100 % en poids de ladite au moins une première couche interne.

8. Matériau multicouche selon l'une quelconque des revendications 1 à 7, comprenant au moins une couche à effet barrière comprenant au moins 90 % en poids, de préférence, au moins 95 % en poids, de manière davantage préférée, environ 100 % en poids, d'un copolymère d'éthylène-alcool vinylique (EVOH), dans lequel, de préférence, le copolymère EVOH contient un pourcentage molaire d'éthylène de 36 % en mole à 48 % en mole, ou d'environ 42 % en mole, et dans lequel le polymère EVOH a un indice de fluage (MFR) de 1 à 3 g/10 min (mesuré selon la norme ISO 1133, 210 °C/2,16 kg), une masse volumique de 1 050 à 1 150 kg/m³ (mesurée selon la norme ISO 1183), un point VICAT de 135 °C à 145 °C (mesuré selon la norme ISO 306), et un point de fusion de 160 °C à 175 °C (mesuré selon la norme ISO 306) et dans lequel, de préférence, l'au moins une couche à base d'EVOH est agencée entre deux couches à base de SBC amorphe.

9. Matériau multicouche selon l'une quelconque des revendications 1 à 8, ayant une perméabilité à l'oxygène inférieure à 5 cm³/m² 24 h bar, une perméabilité au dioxyde de carbone inférieure à 50 cm³/m² 24 h bar (toutes deux mesurées selon la norme ASTM D 3945), et une perméabilité à la vapeur d'eau inférieure à 20 g/m²/24 h (mesurée selon la norme ASTM F 1249, à 35 °C et 95 % d'humidité relative), et dans lequel le matériau multicouche a un effet barrière contre un hydrocarbure saturé d'huile minérale (MOSH) et un hydrocarbure aromatique d'huile minérale (MOAH).

10. Matériau multicouche selon l'une quelconque des revendications 1 à 9, comprenant :
- au moins une couche de surface comprenant i) de 25 % en poids à 35 % en poids de TPEB, ii) de 25 % en poids à 35 % en poids d'ULDPE, et iii) de 20 % en poids à 30 % en poids de LLDPE, et, éventuellement, iv) de 10 % en poids à 15 % en poids de MBAF et/ou de 0,5 % en poids à 2 % en poids d'un agent antioxydant et/ou de 0,5 % en poids à 2 % en poids d'un agent adjuvant technologique ;
- au moins une première couche interne, en contact avec ladite au moins une couche de surface, comprenant i) de 5 % en poids à 15 % en poids de MBAF et ii) de 85 % en poids à 95 % en poids de TPEB, dans lequel la MBAF et le TPEB forment ensemble environ 100 % en poids de ladite au moins une première couche interne ;
- au moins une deuxième couche interne, en contact avec ladite au moins une première couche interne, comprenant plus de 90 % en poids, ou plus de 95 % en poids, ou environ 100 % en poids de SBC amorphe ;
- au moins une troisième couche interne, en contact avec ladite au moins une deuxième couche interne, comprenant au moins 90 % en poids, ou au moins 95 % en poids, ou environ 100 % en poids d'EVOH.

11. Matériau multicouche selon l'une quelconque des revendications 1 à 9, qui est un film double, obtenu par adhérence de deux films simples, chacun d'eux comprenant :
- une première couche de surface comprenant i) de 25 % en poids à 35 % en poids de TPEB, ii) de 25 % en poids à 35 % en poids d'ULDPE, et iii) de 20 % en poids à 30 % en poids de LLDPE, et, éventuellement, iv) de 10 % en poids à 15 % en poids de MBAF et/ou de 0,5 % en poids à 2 % en poids d'un agent antioxydant et/ou de 0,5 % en poids à 2 % en poids d'un agent adjuvant technologique ;
- au moins une première couche interne, en contact avec ladite au moins une couche de surface, comprenant i) de 5 % en poids à 15 % en poids de MBAF et ii) de 85 % en poids à 95 % en poids de TPEB, dans lequel la MBAF et le TPEB forment ensemble environ 100 % en poids de ladite au moins une première couche interne ;
- au moins une deuxième couche interne, en contact avec ladite au moins une première couche interne, comprenant plus de 90 % en poids, ou plus de 95 % en poids, ou environ 100 % en poids de SBC amorphe ;
- au moins une troisième couche interne, en contact avec ladite au moins une deuxième couche interne, comprenant au moins 90 % en poids, ou au moins 95 % en poids, ou environ 100 % en poids d'EVOH ;
- une seconde couche de surface comprenant i) de 90 % en poids à 97 % en poids d'un terpolymère de polypropylène/butène/alpha-oléfine (TPA), dans lequel l'alpha-oléfine est de préférence l'octène, et ii) de 3 % en poids à 10 % en poids d'un plastomère de copolymère de polypropylène-éthylène-métallocène (CPEM).

12. Matériau multicouche selon la revendication 11, dans lequel le TPA a un indice de fluage (MFR) de 3 à 6 g/10 min (mesuré selon la norme ISO 1133, 230 °C/2,16 kg), une masse volumique de 850 à 950 kg/m³ (mesurée selon la norme ISO 1183), un point VICAT de 100 °C à 115 °C (mesuré selon la norme ISO 306), et un point de fusion de 122 °C à 140 °C (mesuré selon la norme ISO 306), et dans lequel le CPEM a un indice de fluage (MFR) de 8 à 12 g/10 min (mesuré selon la norme ISO 1133, 230 °C/2,16 kg), une masse volumique de 800 à 900 kg/m³ (mesurée selon la norme ISO 1183), un point VICAT de 20 °C à 35 °C (mesuré selon la norme ISO 306), et un point de fusion de 50 °C à 65 °C (mesuré selon la norme ISO 306).

13. Procédé de co-extrusion double bulle pour obtenir le matériau selon l'une quelconque des revendications 1 à 12, comprenant une étape de co-extrusion et une étape d'orientation du matériau extrudé, dans lequel l'étape d'orientation est réalisée dans les conditions de fonctionnement suivantes :
- vitesse tubulaire 4 à 8 m/min
- vitesse de seconde bulle 24 à 48 m/min
- diamètre tubulaire 150 à 250 mm
- diamètre de seconde bulle 900 à 1 500 mm
- taux de soufflage (BUR), défini comme le rapport entre le diamètre de bulle et le diamètre de tube co-extrudé, ≥ 5 et de préférence ≤ 6 ;
- rapport d'étirage de bulle (BSR), défini comme le rapport entre la vitesse d'arrivée de bulle secondaire et la vitesse d'arrivée de tube extrudé après refroidissement dans une cuve d'eau froide, ≥ 5 et de préférence ≤ 6,
l'utilisation de préférence d'un rapport BUR/BSR d'environ 1,
dans lequel, de préférence, l'étape de co-extrusion est réalisée à l'aide des conditions de fonctionnement suivantes :
| | |
|---|---|
| - température de four | 350 à 450 °C ; |
| - température de dernier étage | 110 à 150 °C ; |
| - température de tête | 220 à 245 °C ; |
| - température de vis d'extenseur | 190 à 240 °C ; |
| - température d'eau de cuve et d'appareil d'étalonnage | 10 à 25 °C ; |
| - débits de vis | 6 à 25 kg/h. |
